# EUROPEAN PATENT APPLICATION

(11) **EP 4 322 082 A1**
(43) Date of publication of application: **14.02.2024**
(21) Application number: 22189903.2
(22) Date of filing: 11.08.2022
(51) Int. Cl.: G06Q 10/063, G06Q 10/0639, G06Q 50/04

(54) **COMPUTER-IMPLEMENTED DETERMINATION AND QUALIFICATION OF MATERIAL COMPOSITIONS**

(71) Applicant: Fehrmann Materials X GmbH, 21107 Hamburg (DE)
(72) Inventor: Fehrmann, Henning, 22297 Hamburg (DE); Rowohl, Frederic, 21465 Wentorf (DE); Tappe, Achim, 21033 Hamburg (DE)
(74) Representative: Maiwald GmbH

(57) **Abstract**

A computer-implemented method of determining a material composition for manufacturing a product (500) is described. The method comprises receiving, at a computing device (100), one or more specification parameters (122) indicative of at least one of a material property, a manufacturing process for manufacturing the product, and a product property; determining one or more material composition recommendations for the material composition based on the received one or more specification parameters; and computing, for each material composition recommendation, one or more expected properties indicative of at least one of an expected material property of the respective material composition recommendation and an expected product property of the product manufactured from the respective material composition recommendation. The method further comprises computing, based on evaluating the one or more expected properties computed for each material composition recommendation against the received one or more specification parameters (122), a suitability measure indicative of a degree of suitability to manufacture the product (500) from the respective material composition recommendation.

## Description

### Technical Field

The present invention generally relates to the field of material development or material design. In particular, the present invention relates to a computer-implemented method of determining a material composition, for example an alloy, for manufacturing a product. The present invention further relates to a computing device configured to carry out steps of the aforementioned method, to a corresponding computer program and to a computer-readable medium storing such computer program.

### Technical Background

The demands and requirements placed on modern industrially manufactured products, such as requirements in terms of producibility at industrial level, mechanical properties, cost or other properties, are constantly increasing. In turn, correspondingly increasing quality requirements, for example regarding one or more material properties, such as tensile strength, ductility, electrical conductivity, biocompatibility, corrosion resistance, etc., are placed on the components and/or the material used to manufacture these products.

These quality requirements often cannot or at least not to a sufficient degree be met by known materials or material compositions. Also, conventional approaches in material development are time-consuming and typically involve manual experimentation to qualify a newly developed material or material composition, for example for manufacturing a particular product or component according to a particular manufacturing process, such as 3D-printing the product using an alloy or metal-based material composition. Such material development processes can take several years, which may lead to substantial delays in product development processes as well as fundamental product development limitations due to limited material choices.

### Summary

It may, therefore, be desirable to provide an improved method and device for determining a material composition for manufacturing a product, for example allowing to overcome or at least mitigate the aforementioned drawbacks of conventional approaches in material development and/or allowing for an efficient and rapid development of a material or material composition for manufacturing a product.

This is achieved by the subject-matter of the independent claims. Further exemplary embodiments and optional features are provided by the dependent claims and the following description.

Aspects of the present disclosure relate to a computer-implemented method of determining a material composition for manufacturing a product, to a computing device or system for carrying out such method, to a corresponding computer program and to a corresponding computer-readable medium, for example a non-transitory computer-readable medium, storing such computer program. Any disclosure presented hereinabove and hereinbelow with reference to one aspect of the present disclosure equally applies to any other aspect described herein.

According to an aspect of the present disclosure, there is provided a computer-implemented method of determining a material composition for manufacturing a product. Alternatively or additionally, the method may refer to a computer-method of selecting, developing and/or qualifying a material composition for manufacturing a product. The method comprises:
- receiving and/or processing, at a computing device including one or more processors, one or more specification parameters indicative of at least one of a material property, a material property range, a manufacturing process for manufacturing the product, a product property, and a product property range;
- determining, computing and/or calculating one or more material composition recommendations for the material composition based on the received one or more specification parameters; and
- determining, computing and/or calculating, for each material composition recommendation, one or more expected properties indicative of at least one of an expected material property of the respective material composition recommendation and an expected product property of the product manufactured from the respective material composition recommendation; and
- determining, computing and/or calculating, based on evaluating the one or more expected properties computed for each material composition recommendation against the received one or more specification parameters, one or more suitability measures indicative of a degree of suitability to manufacture the product from the respective material composition recommendation.

In particular by determining one or more material composition recommendations, computing one or more expected properties and suitability measures reflecting a suitability of each material composition recommendation for manufacturing the product, the method according to the present disclosure can advantageously allow for a rapid and efficient development of high-quality material compositions, in particular in a targeted manner, for example meeting specific requirements and/or demands placed on the material composition, the product manufactured therefrom, and/or the manufacturing process used to manufacture the product. As a consequence, the method of the present disclosure may allow for shortened innovation or development cycles in one or both material development and product development.

In the context of the present disclosure, the product to be manufactured can relate to an object or structure, in particular a solid or semi-solid object or structure, of arbitrary size and shape. The product may, for example, relate to an industrially producible product or object. For instance, the product may refer to a part, component or member of a device or another product to be manufactured.

Further, as used herein, the material composition to be determined by the method of the present disclosure can refer to or denote a composition of two or more materials and/or chemical elements. For example, the material composition can be selected among the group consisting of an alloy, an Aluminum-based alloy, a Magnesium-based alloy, an Aluminum-Magnesium alloy, a metal, and a non-ferrous metal. While the method of the present disclosure may provide particular advantages for determining one or more of the aforementioned types of materials, it is emphasized that the present disclosure is not limited to determination of these material compositions, but can advantageously be applied for developing any other type of material, including composite material, biomaterial, protein-based material, semiconductor material, plastic material, synthetic material, and polymer-based material.

A material property may in the context of the present disclosure relate to one or more of a physical, thermophysical, chemical, mechanical or other characteristic of the respective material or material composition. A product property, on the other hand may refer to a physical, a thermophysical, chemical, mechanical or other characteristic of the product, for example when manufactured from the material composition under consideration.

As used herein, the one or more specification parameters may refer to a specification profile and/or specification data specifying and/or defining one or more material properties of a material composition to be used to manufacture a product, one or more manufacturing processes for manufacturing the product, and/or one or more product properties of the product. The one or more specification parameters may be indicative of and/or reflect one or more requirements, demands and/or constraints the material composition, the product and/or one or more manufacturing processes for producing the product should fulfil. Non-limiting examples of specification parameters may define or be associated with a material characteristic or property, such as a thermophysical property, a kinetic property, an electric property, a magnetic property, a mechanical property, a thermodynamic property, a solidification property, an enthalpy, a heat capacity, a density, a coefficient of thermal expansion, a viscosity, a surface tension, an interfacial energy, a thermal conductivity, a surface tension, corrosion resistance, and a surface quality. Other examples of specification parameters may relate to a product property or characteristic, such as a geometry, size, shape, robustness, elasticity, magnetic property, conductivity, hardness, cost per unit weight, cost per unit volume, mechanical property, electrical property, tensile strength, porosity, corrosion resistance, rigidity, and a surface characteristic of the product or any other property or characteristic associated with the product. Non-limiting examples of manufacturing processes indicated by one or more specification parameters can include additive manufacturing, metal additive manufacturing, melting, thermal treatment, powder bed fusion, atomization, metal atomization, centrifugal liquid metal atomization, casting, 3D printing, and rolling.

The one or more specification parameters may be received by the computing device in the form of specification data, which may involve or include processing at least some of the specification parameters or data by means of the computing device and/or the one or more processors thereof. The one or more specification parameters may for example be retrieved from an internal data storage of the computing device and/or an external data source or database communicatively coupled to and/or accessible by the computing device.

Accordingly, the specification parameters may optionally be transmitted from one or more external data sources and/or databases to the computing device.

In an example, one or more specification parameters may be received at the computing device, which may be indicative of at least one of a material property, a material property range, a manufacturing process for manufacturing the product, a product property and/or product property range. It should be noted that in the context of the present disclosure, reference to a single parameter or property can include reference to a parameter range or property range. In particular, any reference to a material property or expected material property can include reference to a material property range or expected material property range. Alternatively or additionally, any reference to a product property or expected product property can include reference to a product property range or expected product property range.

In the context of the present disclosure, the computing device may refer to one or more data processing devices. For instance, the computing device may refer to a standalone device or a plurality of devices, which may be communicatively and/or operatively couplable or interconnectable for data exchange. Accordingly, the computing device may refer to a computing network or system, for example a cloud computing network. Alternatively or additionally, at least some functions or functionalities of the computing device may be implemented in one or more mobile devices. It is noted that any reference herein to a single computing device can include a plurality of computing devices.

In an exemplary embodiment, the computing device comprises a data storage for storing data, such as the one or more specification parameters, data related to the one or more material composition recommendations, data related to the one or more determined expected properties and/or the determined one or more suitability measures. Alternatively or additionally, software instructions may be stored at the data storage, which, when executed by the one or more processors of the computing device instruct the computing device to carry out steps of the method as described herein.

Optionally, the computing device may comprise at least one artificial intelligence, Al, module configured and/or trained to carry out one or more steps of the method described herein. For instance, one or more machine learning or other artificial intelligence-based algorithms may be implemented in the computing device to perform one or more steps of the method described herein.

For example, a machine learning algorithm may be configured to identify one or more material composition recommendations based on analyzing data stored in one or more databases in terms of one or more patterns. Alternatively or additionally, a machine learning algorithm may be configured to determine and/or compute one or more expected properties. Alternatively or additionally, a machine learning algorithm may be configured to determine and/or compute one or more suitability measures. These and other aspects will be further elucidated hereinbelow. It should be noted, however, that the present disclosure is not limited to an Al-based implementation.

According to an embodiment, determining one or more expected properties for each material composition recommendation can include determining an uncertainty or range of uncertainty associated with the determined one or more expected properties. For example, for each expected property, an uncertainty may be computed, and optionally provided as relative percentage of the expected property. Alternatively or additionally, for each range of expected properties, a probability distribution for the uncertainty over the range may be computed, and optionally provided as relative percentage.

In an exemplary embodiment, the computing device comprises a communication circuitry for communicatively coupling the computing device to one or more further computing devices and/or to one or more external data sources. Any one or more communication interfaces, standards and/or protocols may be used for data communication, such as for example a BUS communication, wired communication, wireless communication, Internet communication, Bluetooth communication, or any other type of communication.

In yet another exemplary embodiment, the computing device may include a user interface for receiving one or more user inputs from a user and/or for data presentation. For instance, a user may provide at least some of the one or more specification parameters at the user interface and the corresponding one or more suitability measures for one or more material composition recommendations may be output at the user interface or another user interface. Alternatively or additionally, a user may provide information associated with one or more specification parameters related to one or more of the material composition (or a desired material composition), the manufacturing process and the product based on filling in a form or questionnaire at the user interface, and the computing device may determine and/or derive the one or more specification parameters based on the information or data provided by the user at the user interface. Alternatively or additionally, the user may specify at least one specification parameter and the computing device may derive and/or determine one or more further specification parameters based on the user input and/or the specified at least one specification parameter. For instance, a user may define a specification parameter related to product property, and the computing device may derive therefrom one or more further specification parameters related to a material property and/or a manufacturing process.

In an exemplary embodiment, the computing device may include at least one application programming interface, API, for receiving one or more user inputs from a user and/or for data transmission. Therein, the at least one API may be configured for communication with another computing device. Optionally, the at least one API may be part of and/or operatively coupled to the user interface of the computing device.

Generally, a material composition recommendation may refer to, define and/or denote a material composition recommended as candidate material composition for manufacturing the product. For instance, a material composition recommendation may refer to and/or include composition data indicative of one or more chemical elements and one or more weight fractions (and/or volume fractions) associated with the one or more chemical elements the material composition recommendation is composed of. In an example, determining the one or more material composition recommendations may include determining a plurality of chemical elements and corresponding weight and/or volume fractions and/or corresponding ranges for the elements or components of the material composition recommendation. Accordingly, determining the one or more material composition recommendations may include determining, computing and/or generating composition data for each of the one or more material composition recommendations.

Optionally, a material composition recommendation may be indicative of, associated with and/or linked with a particular manufacturing process for producing the product from the respective material composition recommendation. Exemplary and non-limiting manufacturing processes can include additive manufacturing, metal additive manufacturing, melting, thermal treatment, powder bed fusion, centrifugal liquid metal atomization, atomization, metal atomization, casting, 3D printing, and rolling of the material composition indicated by the respective material composition recommendation to manufacture the product. Any other manufacturing process or type of manufacturing process may be reflected by a material composition recommendation.

Further optionally, a material composition recommendation may be indicative of one or more structure properties and/or property ranges of at least one component of the respective candidate material composition when manufacturing the product, for example according to one or more manufacturing processes. In other words, a material composition recommendation may include structure data indicative of a structure, structure property and/or structure property range of the candidate material composition and/or one or more components thereof. Alternatively or additionally, determining one or more expected properties for a material composition recommendation may include determining one or more of an expected structure, structure property and structure property range for one or more components of the material composition recommendation and/or for the material composition recommendation. This may allow to further evaluate the suitability of the material composition recommendation for manufacturing the product.

The structure, structure property or property range of a material composition recommendation, its material or the product manufactured therefrom may particularly refer to or relate to one or more of a microstructure, an atomic structure, an atomistic structure and a crystal structure of the material composition recommendation, but may alternatively or additionally relate to the nanostructure or macrostructure, as further described hereinbelow.

As illustrative and non-limiting examples, carbon is capable of forming many allotropes, which are structurally different forms of the same chemical element. Well-known forms include diamond and graphite, but also ball shapes such as buckminsterfullerene, sheet forms like graphene as well as tube forms like nanotubes are possible. Any one or more of such structures may be defined in or indicated by a structure property indicated by a material composition recommendation and/or the one or more expected properties computed therefor.

In an example, for one or more components or chemical elements of a material composition recommendation and/or for each material composition recommendation, one or more structure properties and/or property ranges may be computed, when manufacturing the product according to a particular manufacturing process. For instance, for each material composition and manufacturing process usable for manufacturing the product from the material composition recommendation, one or more (expected) structure properties and/or (expected) property ranges may be computed for one or more components of the material composition recommendation or the entire material composition recommendation. Since a material composition (or corresponding recommendation) can take different structures according to or dependent on the manufacturing process applied, an evaluation of each material composition recommendation in terms of structure and manufacturing process can allow to identify the most suitable or optimum material composition with high level of accuracy. Also, efforts and time required for experimental verification or validation of the material composition for being suitable for manufacturing the product may be significantly reduced.

In a non-limiting and merely illustrative example, one or more of heat treatment and mechanical treatment applied during the manufacturing process of the product, including heating, compressing, and/or hot isostatic pressing, can affect, alter or modify a structure of the material. For instance, so-called defects, which may generally refer to deviations from the regular or normal lattice structure, e.g. at the grain boundaries of a lattice, can be modified by heat treatment. Such effects can, for example, be simulated and included in one or more expected properties or property ranges computed for one or more material composition recommendations and/or one or more corresponding manufacturing processes for manufacturing the product.

In the context of the present disclosure, determining, computing and/or calculating the suitability measure may include analyzing the one or more material composition recommendations and/or the one or more expected properties computed for each material composition recommendation in terms of the received one or more specification parameters. This may include analyzing the one or more material composition recommendations in terms of one or more of a material property, a manufacturing process or type of manufacturing process used for manufacturing the product, and a product property indicated by one or more of the specification parameters.

As used herein, the suitability measure may generally indicate whether or not a computed material composition recommendation may be suitable for and/or usable for manufacturing the product in accordance with the one or more specification parameters. Accordingly, the suitability measure may for example be or include a binary parameter indicating whether or not a computed material composition recommendation is suitable for and/or usable for manufacturing the product in accordance with the one or more specification parameters.

It should be noted that the suitability measure may be computed deterministically, for example based one or more models implemented in the computing device. Alternatively or additionally, the suitability measure may be computed by an Al-based algorithm. For example, the suitability measure may refer to an output of an Al-based algorithm configured to evaluate and/or analyze each material composition recommendation and/or the one or more expected properties in terms of the received one or more specification parameters.

According to an embodiment, the suitability measure is a numerical measure indicative of a qualitative and quantitative suitability to manufacture the product from the respective material composition recommendation. Accordingly, the suitability measure may quantitatively and qualitatively reflect a producibility of the product using the corresponding computed material composition recommendation. For example, the suitability measure may refer to or include a score on a predetermined scale allowing to inter-compare a plurality of material composition recommendations determined for manufacturing the product in accordance with and/or taking into account the one or more specification parameters.

For example, the suitability measure may reflect, be indicative of, and/or correlate with a deviation of the expected properties computed for each of the material composition recommendations from one or more properties indicated and/or specified by the one or more specification parameters. Alternatively or additionally, the suitability measure may be indicative of a probability or likelihood that the one or more expected properties computed for the corresponding material composition recommendation substantially match the one or more specification parameters. Alternatively or additionally, the suitability measure may be indicative of a probability or likelihood that the one or more specification parameters or one or more demands, requirements and/or constraints associated therewith can be fulfilled when manufacturing the product from the corresponding material composition recommendation.

According to an embodiment, the method further comprises selecting one of the one or more material composition recommendations as the material composition and/or as final material composition for manufacturing the product based on the computed one or more suitability measures. For example, a set or plurality of material composition recommendations and corresponding suitability measures may be determined by the computing device. Based on the set or plurality of suitability measures, the material composition recommendation being (in general) suitable or being most suitable for manufacturing or producing the specified product may be selected and proposed by the computing device as material composition. Therein, the selected material composition recommendation may also be referred to as final material composition for manufacturing the product. Alternatively or additionally, a plurality of selected material compositions may be provided, for example in the form of a list that may optionally be sorted according to the suitability measures for the material composition recommendations contained in the list. This can allow for a targeted and an efficient identification of the optimum material composition recommendation, and hence the optimum (final) material composition for manufacturing the product within a short period of time. Also, time-consuming experiments using one or more of the recommended material compositions for manufacturing the product may not be necessary, as the computational evaluation of material composition recommendations and determination of corresponding suitability measures may allow for a comprehensive analysis of the producibility for numerous different material composition recommendations within a short period of time, and taking into account numerous properties related to the material composition, the product and the manufacturing process. As a consequence, cost for material development and product development may significantly be reduced while ensuring that quality demands and constraints on the product and its material can be fulfilled.

According to an embodiment, a plurality or set of material composition recommendations is determined and for each material composition recommendation a suitability measure is computed, wherein the method further comprises selecting one of the one or more material composition recommendations as the material composition or final material composition for manufacturing the product based on inter-comparing at least a subset of the suitability measures computed for different material composition recommendations. Such inter-comparison of the suitability measures may allow to quantitatively identify and/or select the material composition being best or most suitable for manufacturing the product among the determined material composition recommendations.

In an example, different material composition recommendations may differ from one another in one or more of a chemical composition and a weight and/or volume fraction associated therewith. For instance, different material composition recommendations may be determined by the computing device based on varying one or more fractions of one or more components of the material composition specified by the specification parameters or specified by another material composition recommendation. Alternatively or additionally, one or more chemical elements and/or components may be varied to determine the plurality of material composition recommendations. Alternatively or additionally, different material composition recommendations may be associated with different manufacturing processes for manufacturing or producing the product, such as e.g. additive manufacturing, metal additive manufacturing, melting, thermal treatment, powder bed fusion, centrifugal liquid metal atomization, casting, 3D printing, and rolling of the respective material composition recommendation to manufacture the product. Accordingly, different manufacturing processes may be considered for determining different material composition recommendations. This may allow to comprehensive analyze a plurality of material composition recommendations in terms of various aspects related to the material composition for the product, to the product itself and/or to the manufacturing process.

According to an embodiment, the method further comprises comparing at least one of the one or more suitability measures computed for one or more material composition recommendations to a predetermined threshold value for the suitability measure, and qualifying the respective material composition recommendation as being suitable for manufacturing the product based on the comparison. For instance, the threshold value for the suitability measure may indicate a desired or minimum suitability. In an exemplary implementation, qualifying the respective material composition recommendation as being suitable for manufacturing the product may include determining whether the determined suitability measure reaches or exceeds the predetermined threshold value. Accordingly, a material composition recommendation having or resulting in a suitability measure reaching or exceeding the threshold value may be considered suitable for or sufficiently suitable for manufacturing the product, such that the one or more specification parameters and/or one or more requirements, demands and/or constraints associated therewith may likely be fulfilled. Such comparison to a predetermined threshold value may allow to filter material composition recommendations that are not suitable for manufacturing the product. Also, based on the threshold value, a minimum quality or minimum degree of suitability may be defined.

The threshold value for the suitability measure may optionally be adjustable and/or definable by a user based on providing one or more user inputs, for example at a user interface of the computing device. Alternatively or additionally, one or more criteria, constraints, demands and/or requirements may be defined by the user based on one or more user inputs, which may include or be associated with one or more of the specification parameters, and the computing device may be configured to determine and/or compute the threshold value for the suitability measure to select and/or determine the (final) material composition for manufacturing the product.

According to an embodiment, the method further comprises applying an evaluation metric including one or more criteria related to the material composition and/or the product manufactured therefrom. The one or more criteria may, for example, be definable and/or adjustable based on one or more user inputs, which may allow to take individual preferences or particular criteria defined by the user into consideration in the overall determination of the material composition for manufacturing the product. In a non-limiting example, the user may define a maximum cost per unit weight of the product, for example by defining one or more specification parameters, wherein the defined maximum cost may be included in or reflected by the evaluation metric.

It should be noted that one or more evaluation metrics may be applied at various instances.

For example, the evaluation metric may be applied for determining the one or more material composition recommendations. Alternatively or additionally, the evaluation metric or another evaluation metric may be applied for determining the suitability measure based on evaluating a material composition recommendation and/or one or more expected properties computed for one or more material composition recommendations against the one or more specification parameters. Alternatively or additionally, the evaluation metric or another evaluation metric may be applied for inter-comparing a plurality of suitability measures determined for a plurality of material composition recommendations.

According to an embodiment, each of the one or more criteria included in the evaluation metric is associated with an adjustable and/or definable weight representative of a relevance of the associated criterion. For example, a set of criteria may be included in the evaluation metric and the corresponding weight for one or more of these criteria may be adjusted by a user based on a user input. Alternatively or additionally, one or more weights may be computed by the computing device, for example based on one or more user inputs. This may allow to individually tailor the process of developing or determining the material composition to specific needs and demands.

According to an embodiment, a plurality of specification parameters indicative of a material property, a manufacturing process for manufacturing the product, and a product property is received at the computing device. In particular, the plurality of specification parameters may include at least one specification parameter indicative of a material property, at least one specification parameter indicative of a production process, and at least one specification parameter indicative of a product property. Therein, only one or a subset of the plurality of specification parameters may be provided based on a user input, wherein one or more further or additional specification parameters may be computed by the computing device based on the at least one user-input-based specification parameter. In other words, one or more further specification parameters may be derived from and/or computed based on at least one specification parameter. Using a plurality of specification parameters related to or indicative of a material property, a production process, and a product property may allow to comprehensively take any constraint, need or demand placed on the overall development of the material composition and/or the product into consideration. Also, efforts and time required to identify, select and/or qualify the most suitable material composition for manufacturing the product may be minimized.

In an example, a user may provide one or more user inputs related to a product property or characteristic of the product, and the computing device may derive one or more material properties the material composition should fulfil to manufacture the product, or vice versa. Alternatively or additionally, one or more production processes may be determined by the computing device based on at least one of a material property and a product property indicated by one or more specification parameters.

According to an embodiment, for each material composition recommendation a plurality of expected properties indicative of an expected material property and an expected product property of the product manufactured from the respective material composition recommendation is computed. In an exemplary implementation, each of the material composition recommendations may be associated with and/or reflect a particular manufacturing process for producing the product according to or using the material of the material composition recommendation. In particular, different material composition recommendations may be associated with different manufacturing processes. By computing at least one expected material property and at least one expected product property, the set of material composition recommendations determined for different manufacturing processes can be comprehensively evaluated and/or inter-compared. This may allow for a comprehensive analysis of effects of the manufacturing processes on the material and/or product properties, without requiring actual production of the product using different manufacturing processes. In turn, this may allow to select not only an appropriate or suitable material composition for the product, but optionally also an appropriate or suitable manufacturing process.

According to an embodiment, the one or more material composition recommendations are determined based on accessing a database and/or retrieving data from a database, which database stores at least one of reference data indicative of one or more material properties of one or more reference material components or chemical elements, reference data indicative of one or more material properties of one or more material compositions, reference data indicative of one or more product properties of one or more products, reference data associated with one or more manufacturing processes for manufacturing one or more products, and reference data associated with material processing of one or more material compositions. Optionally, structure data or information of one or more materials may be stored in the database, for example in dependence of a manufacturing process applied. Therein, the database may include at least one of experimental data and simulation data. Using such database may allow to determine and/or generate a plurality of material composition recommendations based on limited data available for a limited number of materials, material compositions, chemical elements and/or products. It is emphasized that the plurality of material composition recommendations may relate to or include known material compositions, for which reference data may be stored in the database, and/or may relate to or include new or unknown material compositions, for which no reference data are stored in the database. Accordingly, based on the database, also new or unknown material compositions can be generated, analyzed and assessed in terms of their suitability to manufacture a particular product.

For example, the database may comprise reference data related to chemical elements, materials and products manufactured from various materials or material compositions. Based on such reference data, the one or more material composition recommendations may be determined based on selecting one or more data elements of the reference data and/or based on combining various data elements of the reference data. For instance, data elements related to different chemical elements can be combined and/or processed to determine a material composition recommendation that includes said different chemical elements. Alternatively or additionally, experimental data and simulation data may be combined and/or processed to determine one or more material composition recommendations. Alternatively or additionally, the database and/or the reference data may be analyzed by means of an Al-based algorithm in accordance with one or more trained patterns to identify and/or determine the one or more material composition recommendations.

According to an embodiment, the one or more expected properties for each material composition recommendation are computed based on simulating the respective material composition recommendation and/or based on simulating a material behavior of the respective material composition recommendation. By determining the one or more expected properties for each material composition recommendation based on simulation, a broad range of materials or material compositions can be comprehensively analyzed, without necessarily requiring experiments or tests to be performed on physical products or sample material.

According to an embodiment, the one or more expected properties for each material composition recommendation are computed based on simulating one or more of a nano structure, an atomic structure, an atomistic structure, a microstructure, and a macro structure of the material composition recommendation and/or the product manufactured therefrom. Accordingly, the one or more expected properties determined for each material composition recommendation may be indicative of one or more of a nano structure, an atomic structure, an atomistic structure, a microstructure, and a macro structure of the material composition recommendation and/or the product manufactured therefrom, for example according to one or more particular manufacturing processes.

For instance, simulating the nano structure of the material composition recommendation may involve simulating an atomic and/or quantum structure of the respective material composition recommendation. Further, simulating the microstructure of the material composition recommendation may involve simulating a molecular and/or crystal structure of the respective material composition recommendation. Moreover, simulating the macro structure of the material composition recommendation may involve simulating at least a part of the product manufactured from the respective material composition recommendation. Accordingly, a plurality of different structural levels of the material composition recommendation may be simulated to gain insights and/or information about the particular material composition recommendation when used for manufacturing the product. Generally, the structure of a material or material composition on a particular level may affect or influence the structure on another level or corresponding material or product properties. For instance, the nanostructure may affect a microstructure or material properties on microstructure level, such as a crystal structure, and the microstructure may optionally also affect the macrostructure of the product when manufactured from the material composition recommendation. Hence, by simulating the material composition recommendations at different structural levels, a comprehensive analysis of the material composition recommendations may be performed. Also, a reliability, quality and robustness in the determination of the final material composition can be increased.

According to an embodiment, the one or more computed expected properties include one or more thermophysical properties, one or more kinetic properties, one or more electric properties, one or more magnetic properties, one or more mechanical properties, one or more thermodynamic properties, and one or more solidification properties of the respective material composition recommendation. In other words, any one or more of the aforementioned properties can be computed by the computing device, for example based on simulation. It should be noted, that also other expected properties can be computed, for example depending on the actual type of material or material composition. For example, biocompatibility may be computed for biocompatible materials or biocompatible material compositions.

According to an embodiment, the one or more computed expected properties include one or more of an enthalpy, a heat capacity, a density, a coefficient of thermal expansion, a viscosity, a surface tension, an interfacial energy, a thermal conductivity, a surface tension, and a surface quality. Any one or more of the aforementioned thermophysical properties can be computed for each of the material composition recommendations. This may allow to comprehensively analyze the thermophysical characteristics or behavior of each of the material composition recommendations.

In a non-limiting example, one or more specification parameters may define a temperature or temperature range the product or its material should remain in the solid phase. By computing one or more of the aforementioned thermophysical properties, and by evaluating these expected properties against the one or more specification parameters, it may be ensured that the determined (final) material composition recommendation fulfils the specified temperature requirement.

According to an embodiment, computing the one or more expected properties for each material composition recommendation includes determining, based on simulation and optionally applying Scheil simulation, Scheil solidification simulation, solidification data indicative of one or more solidification and/or cooling curves for the respective material composition recommendation. The solidification data may generally be representative of a temperature behavior of the respective material composition recommendation in dependence of time or cooling time. In particular, the solidification data may allow to determine phase changes of the respective material composition recommendation from liquid to solid phase or vice versa. Such information might then be used to evaluate whether a particular material composition recommendation can withstand a specified temperature range, for example, or is suitable for a particular manufacturing process.

According to an embodiment, computing the one or more expected properties for each material composition recommendation includes determining, based on simulation and optionally applying a crack susceptibility coefficient property model, at least one crack susceptibility coefficient or index for the respective material composition recommendation. The crack susceptibility coefficient or index may in particular indicate or denote a likelihood for a material composition to crack during solidification. For instance, determining the crack susceptibility coefficient or index may allow to analyze whether a particular material composition can be used for a particular manufacturing process.

According to an embodiment, computing the one or more expected properties for each material composition recommendation includes determining, based on simulation and optionally applying an equilibrium property model, phase data indicative of a phase behavior and/or phase diagram of the respective material composition recommendation. The phase data may generally be representative of a phase behavior and/or phase changes of the respective material composition recommendation in dependence of two or more parameters, such as pressure and temperature. Such information might then be used to evaluate whether a particular material composition recommendation can be used for a particular manufacturing process, for example.

According to an embodiment, computing the one or more expected properties for each material composition recommendation includes determining, based on simulation and optionally applying a Seidman model, precipitation strengthening data indicative of precipitation strengthening of the respective material composition recommendation. Precipitation strengthening or hardening may generally refer to a heat treatment usable to increase yield strength of malleable materials or material compositions. Hence, precipitation data may be useful to estimate or determine an expected yield strength in dependence of a particular simulated heat treatment. Also, certain material compositions, such as structural alloys of aluminium, magnesium, nickel, titanium and certain steels, heat or temperature treatment can cause a so-called yield strength anomaly providing increased high-temperature strength. Also such or other effects can be simulated and hence evaluated for the material composition recommendations.

According to an embodiment, computing the one or more expected properties for each material composition recommendation includes determining, based on simulation and optionally applying a yield strength property model, yield strength data indicative of solid solution strengthening of the respective material composition recommendation. Solid solution strengthening may generally refer to a technique of alloying that can be used to improve or increase the strength of a pure metal, wherein atoms of an alloying element are added to the crystalline lattice of another element or base element, thereby forming a solid solution with increased strength. Such or other effects can be simulated and hence evaluated for the material composition recommendations.

According to an embodiment, computing the one or more expected properties for each material composition recommendation includes simulating at least a part of one or more manufacturing processes for manufacturing the product from the respective material composition recommendation. Non-limiting examples of manufacturing processes include additive manufacturing, metal additive manufacturing, melting, thermal treatment, powder bed fusion, centrifugal liquid metal atomization, atomization, metal atomization, using wrought alloys, casting, 3D printing, extrusion and rolling of the respective material composition recommendation to manufacture the product. Therein, at least a part of or the entire manufacturing process may be simulated. Hence, one or more expected product properties and/or an influence of one or more material properties and/or the manufacturing process on the one or more product properties can be evaluated and analyzed for each of the material composition recommendations.

According to an embodiment, simulating at least a part of one or more manufacturing processes for manufacturing the product from the respective material composition recommendation includes determining one or more process parameters indicative of the simulated manufacturing process. For instance, the one or more process parameters may be indicative one or more parts of a manufacturing device or apparatus. Alternatively or additionally, the one or more process parameters may be indicative of one or more operational parameters for operating one or more parts of a manufacturing device or apparatus. Alternatively or additionally, the one or more process parameters may be indicative of a process condition, under which the product is manufactured at one or more instances of the manufacturing process. By determining one or more of the aforementioned process parameters, influences of these parameters on the product can be evaluated. Also, one or more process parameters may be determined, which should preferably be used for manufacturing of the actual product, thereby allowing to at least partly design or develop the actual manufacturing process, including devices or machinery used for manufacturing.

According to an embodiment, the determined one or more process parameters include one or more of one or more atomizer parameters, a liquid metal flow rate, a liquid metal temperature, a liquid metal droplet size, a powder particle size, a trajectory of a powder particle, a process time, a solidification time, a cooling time, a convection coefficient, a Reynold's number, a Laser intensity, a melting temperature, a heat treatment regime, a duration of one or more process steps, a fluidity, a morphology, a productivity, a density, and a surface roughness. Alternatively or additionally, parameters related to fine casting, sand casting, permanent mold casting, die casting and others may be determined by the computing device and used to evaluate the material composition recommendations against the specification parameters.

According to an embodiment, computing the one or more expected properties for each material composition recommendation includes simulating the product manufactured from the respective material composition recommendation and determining one or more expected product properties including one or more of a mechanical property of the product, an electrical property of the product, a magnetic property of the product, tensile strength of the product, hardness of the product, porosity of the product, corrosion resistance of the product, a rigidity of the product, and a surface characteristic of the product. Any one or more of the aforementioned as well as other expected product properties may be determined by the computing device and optionally used to evaluate the material composition recommendations against the specification parameters.

According to an embodiment, the one or more specification parameters are indicative of one or more of a geometry of the product, a geometry of a part of the, a mechanical property of the product, an electrical property of the product, a magnetic property of the product, tensile strength of the product, hardness of the product, rigidity of the product, porosity of the product, corrosion resistance of the product, cost per unit weight of the product, and a surface characteristic of the product. Any one or more of the aforementioned as well as other specification parameters may be received and/or computed by the computing device, which may optionally be used to evaluate the material composition recommendations.

According to an embodiment, the method further comprises varying one or more components and/or one or more weight fractions for at least one material composition recommendation, thereby assessing a sensitivity and/or uncertainty associated with the one or more varied components and/or weight fractions. Based on such sensitivity analysis, further insights on the actual requirements placed on the manufacturing process can be gained. For instance, a certain range or spectrum of compositions and/or range of weight fractions may be determined, within which a material composition may be varied for manufacturing the actual product without adversely affecting one or more product properties, for example as defined by one or more specification parameters. Alternatively or additionally, an uncertainty of the suitability measure may be estimated based on varying one or more components and/or one or more weight fractions, which can in turn allow for a reliable qualification of a material composition recommendation as being suitable for manufacturing the product.

A further aspect of the present disclosure relates to a computer program, which when executed on a computing device, instructs the computing device to carry out steps of the method according to the present disclosure.

A further aspect of the present disclosure relates to a computer-readable medium storing a computer program, which when executed on a computing device, instructs the computing device to carry out steps of the method according to the present disclosure.

Yet another aspect of the present disclosure relates to a computing device including one or more processor for data processing, wherein the computing device is configured to carry out steps of the method according to the present disclosure.

Again, it is emphasized that any disclosure presented hereinabove and hereinbelow with reference to one aspect of the present disclosure equally applies to any other aspect of the present disclosure.

In the following, various exemplary features and illustrative examples of aspects of the present disclosure are summarized. The method and computing device or system described herein can advantageously allow for an automated development of high-performance material compositions, in particular alloys, which can allow for a significant reduction in the time required for the selection or determination of materials or material compositions, their development and their qualification. This can also substantially accelerate the development of new material compositions and products. For instance, according to a requirement or specification profile indicated by the one or more specification parameters, one or more material composition recommendations can be generated, developed, and/or simulated, taking into account one or more material properties, aspects of the manufacturing processes and/or one or more product properties. This may particularly allow for a selection and development of material compositions, which may be optimal in view of certain requirements, for example as indicated by the one or more specification parameters. This can ensure high performance of the material compositions as well as the products manufactured therefrom.

Although the present disclosure is not limited thereto, material development times can further be reduced by the use of Al-based algorithms or systems, for example self-learning systems, devices or algorithms. Such systems can be used in different ways in this context. For example, any newly formulated or generated material composition, especially metal alloy, can be evaluated in terms of feasibility, expected physical properties and suitability for different component or product manufacturing processes, such e.g. casting, 3D printing, rolling. This can allow for an estimation which properties can be expected for the material composition recommendation and which requirements it fulfills even before prototypical production of new material compositions and initial tests or experiments. Alternatively or additionally, this can allow for a prediction with which material certain requirements for a component or product can best be realized. Accordingly, by providing one or more specification parameters, for example related to relevant information of the product (e.g. geometry), related to one or more material properties or desired material properties (e.g. tensile strength, ductility, electrical conductivity, biocompatibility, magnetic properties, corrosion resistance), and optionally related to a (desired) manufacturing processes (e.g. casting, 3D printing, rolling), the computing device can select and/or generate the material composition that best meets the specific requirements indicated by the one or more specification parameters, for example based on a material library or database storing reference data and based on computing one or more material composition recommendations, as described hereinabove. Alternatively or additionally, for example if no corresponding material is contained in the database, it can be developed automatically by the computing device based on the computed one or more material composition recommendations and/or based on computing additional material composition recommendations.

The computing device may optionally include a support or assistance module to support the user in describing material properties based on providing one or more user inputs at the user interface. The assistance module may be configured for converting colloquial formulations into information that can be processed by the computing device, and on the other hand may offer assistance in completing the required data or information, for example required for defining one or more of the specification parameters. For instance, since stress on the materials of a product may depend substantially on the product geometry, or individual parts or segments of the product, e.g. webs, corners and edges, the assistance module may request information to be provided in this respect, either in the form of one or more specification parameters or such that the computing device can derive one or more specification parameters therefrom. Further, for some material compositions, e.g. amorphous metals, the different manufacturing processes (e.g. 3D printing, injection molding, etc.) may represent relevant specification parameters for a material composition, since the properties of the materials to be achieved may differ greatly between the manufacturing processes of a product. Alternatively or additionally, various material processing methods or processes may be represented by one or more specification parameters. For example for composite materials, the material properties may be dependent on the manufacturing processes of the material, such as e.g. bonding or adhesion. In particular for metal alloys, the properties, quality, and costs may often be highly dependent on the manufacturing processes and/or process conditions or parameters. Any one or more of these and other aspects can be considered by the computing device, for example based on defining one or more specification parameters in accordance therewith and/or based on computing one or more expected properties for the one or more material composition recommendations.

Optionally, on the basis of the one or more specification parameters, e.g. related to one or more required material properties, a final material composition may be determined based on generating one or more material composition recommendations using a database, for example based on selecting corresponding reference data and optionally combining various reference data. This may include computation of the corresponding suitability measures. Optionally, an evaluation metric or preference metric may be applied, for example to weigh up potentially conflicting or mutually influencing property combinations against each other. Alternatively or additionally, for example if insufficient reference data is stored in the database to determine a material composition recommendation that meets the requirements specified by the specification parameters, one or more material composition recommendations can be generated based on simulation, for instance Al-based simulation, of material compositions, manufacturing processes, and parts of the manufactured products.

For example, one or more specification parameters may be mapped on different mutually influencing three-dimensional structural levels, such as nanostructure, microstructure and macrostructure. Relevant expected properties computed by the computing device may include, for example, the crystal structure and its defects, the grain or particle sizes (e.g. incl. their distribution), and the behavior at the grain boundaries. Based on or considering one or more of such expected properties, the suitability measures for the material composition recommendations may be computed.

The suitability measures determined for each material composition recommendation may be regarded as digital qualification, for example providing an indication about the probability with which the expected properties or specification parameters occur during industrial realization or production. The suitability measure may optionally provide a quantitative statistical uncertainty (e.g. due to the sensitivity of the input parameters or insufficient data). Such digital qualification by means of the suitability measure may significantly reduce laboratory and prototype experiments for qualifying material compositions for industrial production.

Generally, identifying and/or selecting the optimum material composition recommendation among a set of determined material composition recommendations may be considered a multi-parameter optimization, in which independent or mutually influencing parameters or properties of the material, properties of the product and/or characteristics of the manufacturing process may be considered in accordance with one or more objectives or requirements defined by the one or more specification parameters. Often, there is no solution that is best for all objectives, as the objectives can be contradictory, and an improvement with respect to one objective can causes a deterioration with respect to another. To solve this, the one or more specification parameters may be regarded as sub-objectives and combined into a common objective function, optionally applying weighting factors. In this way, a simplified objective function may be obtained and the optimum material composition recommendation may be found as single solution to the common object function. Alternatively or additionally, separate optimization for all possible combinations of weighting factors or sub-objectives may be applied and the optimum material composition recommendation may be determined based on further evaluating the corresponding suitability measures.

Preferably, a large amount of information or reference data should be available in the database for numerous materials, elements, material compositions and products. It should be noted that the database may have a static or dynamic data structure. For instance, while some material development applications may only require consideration of static parameters or properties of the material or product, others may require a consideration of a dynamic behavior of a material composition in dependence of one or more other parameters, as for example may be the case when thermally treating a material during manufacturing. Any of such aspects can be considered and reflected in the database. For instance, the database may comprise a data structure allowing to represent multi-dimensional structures on the one hand and the parameter-dependent behavior on the other hand, such as e.g. a representation of the temporal change of a 3D structure during heat treatment.

Since it may be expected that certain material compositions, e.g. certain alloy groups, behave similarly, at least with regard to some parameters, the database structure or database may be configured to enrich itself. This enrichment can be based on new knowledge, e.g. starting from the result of the qualification process for a material composition recommendation and drawing conclusions therefrom for other material composition recommendations, e.g. other members of the alloy group. Such derived information can then be stored in the database to enrich the database.

In the following, yet another exemplary and non-limiting implementation of the method of the present disclosure is described. The computing device may be configured to select, determine, identify, develop and/or qualify a material composition, which may for example correspond to a most suitable material composition on the basis of a requirement profile and/or one or more specification parameters. A database, e.g. a material composition database, may contain reference data, such as one or more complete sets of data for known material compositions. Therein, the reference data may be indicative of one or more of physical, chemical or biological properties, lattice structure properties and any other property or characteristic for one or more chemical elements, one or more material compositions and/or one or more products. Accordingly, the database may, alternatively or additionally, refer to a material component database containing reference data for each chemical element of interest for potential material compositions, also with regard to the one or more material properties, such as e.g. physical and chemical properties, an arrangement of the different alloy participants, and the like. The reference data may also include theoretical combinatorics with other elements. The database may comprise a data (set) structure that contains properties related to both reference data related to the material composition and reference data related to the material components or chemical elements, and may allow for complex pattern recognition to be performed for known material compositions. Optionally, the computing device can be configured to adapt the database to various algorithms for the generation of material composition recommendations. Alternatively or additionally, a multidimensional, in particular 3D, structure may be represented by the reference data, and/or parameter-dependent behavior may be included in or derived from the reference data.

By way of example a first trained AI algorithm may identify one or more material composition recommendations based on pattern recognition using the database. A second AI algorithm, which may differ from the first AI algorithm at least in terms of training and/or configuration, may be invoked or used to generate one or more material composition recommendations in addition to or in the alternative to the one or more material composition recommendations generated by the first AI algorithm. For instance, in the event that none of the known material combinations or compositions recommended by the first AI algorithm meet the requirement profile defined by the specification parameters, the second AI algorithm may be invoked and the material composition recommendations generated therewith can be analyzed. At any stage, for instance predicted or expected properties, optionally along with a statistical uncertainty, may be computed and/or output by any of the first and second AI algorithm. Optionally, an evaluation metric can be applied to limit the variety of results by means of selectable and prioritizable specification parameters, for instance including qualification requirements.

For example, based on the one or more specification parameters, e.g. related to one or more physical properties, manufacturing processes and/or product properties, one or more material composition recommendations may be generated and/or selected based on accessing the database. Corresponding one or more expected properties and/or suitability measures may then be computed by the computing device, which may allow to inter-compare the material composition recommendations in terms of their overall suitability for manufacturing the product according to the requirements defined by the specification parameters. Optionally, one or more (final) material compositions or material composition recommendations may be selected by the computing device. Optionally, the selected material compositions may be sorted according to their suitability based on the suitability measure. In the alternative or in addition, the second AI application or algorithm may generate, for example based on combining reference data from the database, one or more material composition recommendations, e.g. on the basis of a simulation of one or more expected properties, such as a expected material behavior. Also these material composition recommendations may be evaluated in terms of their suitability based on computing one or more expected properties, one or more suitability measures, and optionally corresponding statistical uncertainties.

These and other aspects of the disclosure will become apparent from and elucidated with reference to the appended figures, which may represent exemplary embodiments and illustrative exemplary implementations.

### Brief Description of the Drawings

The subject-matter of the present disclosure will be explained in more detail in the following with reference to the attached drawings, wherein:
Fig. 1 shows a computing device for determining a material composition for manufacturing a product according to an exemplary embodiment;
Fig. 2 shows a flowchart illustrating steps of a method of determining a material composition for manufacturing a product according to an exemplary embodiment; and
Fig. 3 shows a flowchart illustrating steps of a method of determining a material composition for manufacturing a product according to an exemplary embodiment.

The figures are schematic only and not true to scale. In principle, identical or like parts are provided with identical or like reference symbols in the figures.

### Detailed Description of Exemplary Embodiments

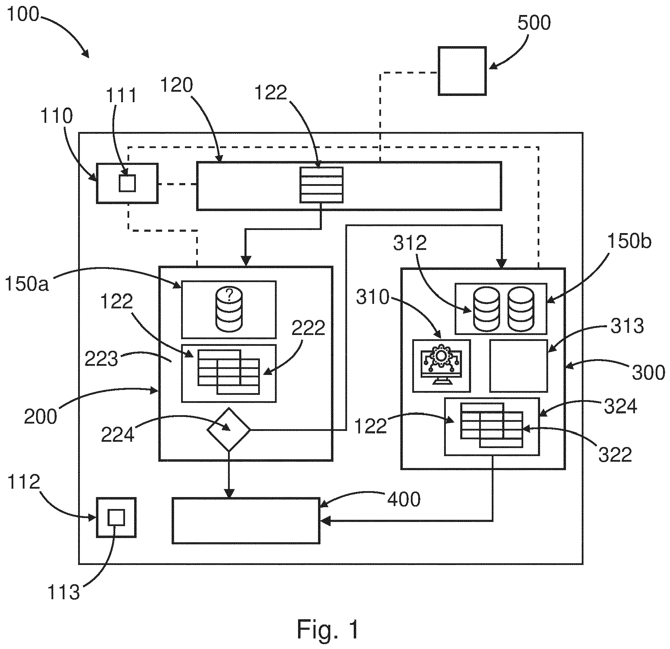

Figure 1 shows a computing device 100 for determining a material composition for manufacturing a product 500 according to an exemplary embodiment. The product 500 is only schematically illustrated in figure 1 and can refer to any object 500 or product 500 that potentially can be manufactured, for example a part of a machinery or apparatus, as described hereinabove.

The computing device 100 includes a control or processing circuitry 110 with one or more processors 111 for data processing. As noted above, the computing device 100 can include a plurality of distributed data processing devices, which may be communicatively and/or operatively coupled.

For such data communication and/or for accessing an external data storage or database, the computing device 100 may optionally include a communication circuitry 112 with one or more communication interfaces 113 operable to exchange data or electronic signals. For instance, one or more of a BUS interface, a wireless interface, a wired interface, an Internet interface, a Network interface, or any other suitable interface may be included in the computing device 100. The one or more communication interfaces 113 may include one or more application programming interfaces, APIs, for receiving one or more user inputs from a user and/or for data transmission. Therein, the at least one API may be configured for communication with another computing device. Optionally, the at least one API may be part of and/or operatively coupled to a user interface 120 of the computing device.

The computing device 100 optionally includes a user interface 120 for receiving one or more user inputs and/or for providing one or more outputs and/or operative controls to the user.

Merely for illustrative purposes, figure 1 schematically shows functional blocks 200 and 300 of the computing device 100, which may illustrate one or more functions carried out by the computing device 100 for determining a material composition for a particular product. Any function described with reference to the computing device 100 and/or functional blocks 200, 300 can be implemented at least in part in software, either in a combined or in separate interacting software modules or components. Alternatively or additionally, one or more of the functions described with reference to the computing device 100 and/or functional blocks 200, 300 can be implemented in one or more Al-based modules or algorithms. For instance, the functional block 200 may be implemented in a first Al-based algorithm or module and the functional block 300 may be implemented in a second Al-based algorithm or module, as is also exemplary described hereinabove and hereinafter. However, any other implementation may likewise be used and is encompassed by the present disclosure.

In an exemplary and non-limiting implementation, functional block 200 may relate to a material composition identification tool or module and functional block 300 may relate to a material composition tool or module. A user may provide, based on one or more user inputs at the user interface 120, data or information related to one or more of a desired material composition, one or more components of a desired material composition, one or more manufacturing processes, and/or one or more product properties. For example, the user may provide one or more specification parameters 122 as user input and/or the computing device 100 may derive one or more specification parameters from the data and information provided by the user. Therein, the one or more specification parameters 122 may refer to or define a specification profile 122 or requirement profile 122 related to one or more of the desired material composition, the manufacturing process, and the product.

For example, one or more specification parameters 122 may be provided by the user based on filling in a questionnaire or electronic form at the user interface 120, wherein parameters, e.g. physical properties, can be entered directly or via an assistance system. Based on the information entered, the specification profile 122 can be created, which can includes, for example, material behavior depending on the manufacturing process, as described hereinabove in detail. The specification parameters 122 or the profile 122 may be used to identify matching material compositions 222 or profiles 222, for example in a database 150a storing reference data, such as in a material composition database.

For example, pattern recognition may be used or applied for this purpose, as exemplary illustrated at block 223 in figure 1. Based thereon, one or more material composition recommendations or candidates for material compositions may be determined and further evaluated in terms of their suitability to manufacture the product 500 in accordance with the requirements defined by the specification profile 122 or parameters 122. Such suitability check, illustrated at block 224 in figure 1, may include the determination of one or more expected properties related to one or more expected material properties, one or more product properties and/or one or more manufacturing processes for each of the material composition recommendations. This may optionally include computation of one or more of these properties based on simulation, as described hereinabove and hereinbelow. Also, one or more suitability measures may be determined for one or more of material composition recommendations. Results of the suitability check at block 224 may optionally be output at the user interface 120 (block 400 in figure 1).

Alternatively or additionally, for example if no match was found using functional block 200, the specification profile 122 or parameters 122 may be used by functional block 300 to generate material composition recommendations representing unknown, new or virtual material compositions, for which no data is available in the database 150a.

For example, one or more algorithms 310 or modules 310 may generate potential material composition candidates or material composition recommendations from basic information or reference data of material compositions from a database 150b, which may be the same as database 150a or differ therefrom, while taking into consideration the specification parameters 122 or profile 122, as illustrated at block 312 of figure 1.

Optionally, as shown at block 313 of figure 1, one or more expected properties for each of the material composition recommendations may be determined based on simulation. Corresponding reference data used for the simulations may be retrieved from one or more databases 150a, 150b. For example, a specification profile 322 may be computed for one or more material composition recommendations based on simulation.

Moreover, suitability measures may be computed at block 324 to further evaluate the material composition recommendations and based thereon determine a final material composition for manufacturing the product, which may optionally be output at block 400, for example with associated simulated or expected properties and statistical uncertainties.

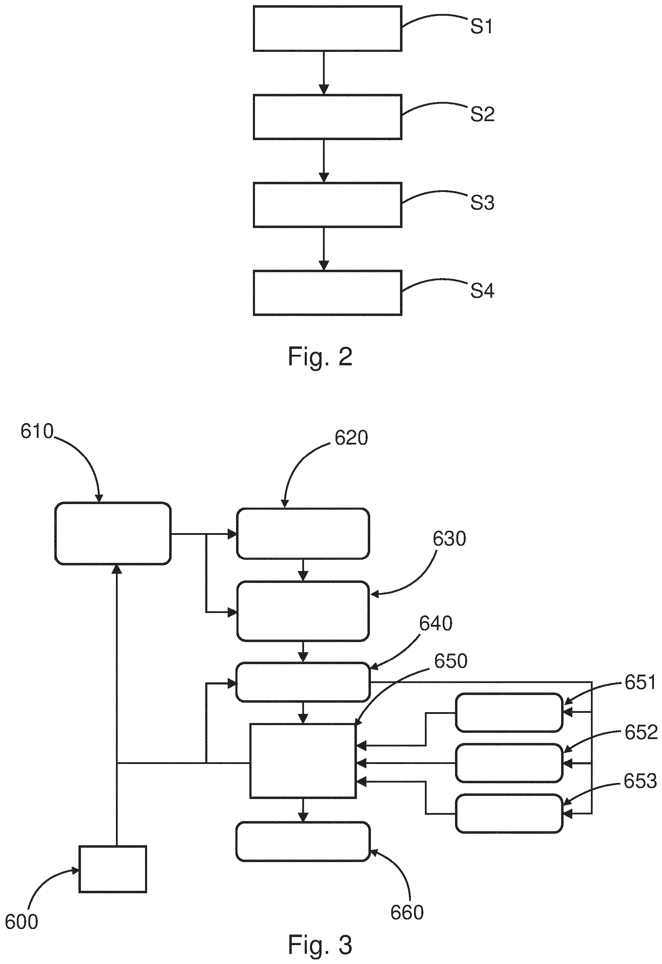

Figure 2 shows a flowchart illustrating steps of a computer-implemented method of determining a material composition for manufacturing a product according to an exemplary embodiment. The method may for example be carried by the computing device 100 described with reference to figure 1.

Step S1 comprises receiving, at the computing device 100, one or more specification parameters 122 indicative of at least one of a material property, a manufacturing process for manufacturing the product 500, and a product property.

Step S2 encompasses determining one or more material composition recommendations for the material composition based on the received one or more specification parameters.

At step S3, for each material composition recommendation, one or more expected properties indicative of at least one of an expected material property of the respective material composition recommendation and an expected product property of the product manufactured from the respective material composition recommendation are determined. Optionally step S3 may include simulating one or more aspects of the material composition recommendation, the product and/or the manufacturing process, as described in detail hereinabove and hereinbelow.

Step S4 comprise computing, based on evaluating the one or more expected properties computed for each material composition recommendation against the received one or more specification parameters 122, a suitability measure indicative of a degree of suitability to manufacture the product from the respective material composition recommendation.

Figure 3 shows a flowchart illustrating steps of a method of determining a material composition for manufacturing a product according to an exemplary embodiment, for example using the computing device 100 described with reference to figure 1. Also, the method illustrated in figure 3 can comprise the same steps as the method of figure 2.

One or more user inputs may be received at step or block 600, for example at the user interface 120 of the computing device 100. Based on the user inputs, one or more specification parameters 122 and/or a specification profile 122 may be computed, as described hereinabove.

Based on the specification parameters 122 or profile 122, one or more material composition recommendations may be computed at block or step 610, for example based on accessing one or more internal databases 150a, 150b or external databases storing reference data.

The specification parameters 122 may optionally be passed to block 620, for example where additional specification requirements or parameters based on step 610 and the reference data can be defined. Alternatively or additionally, the specification parameters 122 may be passed to block 630, where for example further specifications or parameters related to the manufacturing process and other information can be collected or generated. For instance, an alloying system and/or principle may be selected at block 630 and/or alloying knowledge may be developed at block 630.

Further, one or more material composition recommendations may be generated or computed and for example listed at block 640. Any one or more of these material composition recommendations may then be further analyzed based on computing one or more expected properties relating to one or more material properties, product properties or properties related to the manufacturing process. For example, one or more expected properties may be computed at blocks 650, 651, 652, 653, for any one or more, in particular all of the material composition recommendations gathered at step 640.

For instance, one or more of a nanostructure, a microstructure and a macrostructure may be simulated to compute one or more expected properties, such as e.g. one or more thermophysical properties, one or more kinetic properties, one or more electric properties, one or more magnetic properties, one or more mechanical properties, one or more thermodynamic properties, one or more solidification properties of the respective material composition recommendation. Alternatively or additionally, one or more of an enthalpy, a heat capacity, a density, a coefficient of thermal expansion, a viscosity, a surface tension, an interfacial energy, a thermal conductivity, a surface tension, and a surface quality may be computed, amongst others.

For example, precipitation strengthening data indicative of precipitation strengthening of the respective material composition recommendation may be computed at block 651, for example applying a precipitation strengthening model. Alternatively or additionally, a solid solution strengthening model may be applied or simulated at block 652 to generate solid solution strengthening data. Alternatively or additionally, a crack susceptibility model may be simulated at step 653 to determine a crack susceptibility index for each material composition recommendation. Also other aspects related to the material composition, the product and/or the manufacturing process may be simulated, as described in more detail above.

The expected properties for each material composition recommendation computed based on simulation at blocks 651, 652, 653, may optionally further be evaluated at step 650 based on determining the suitability measure for each material composition recommendation and optionally applying an evaluation metric to identify or select the final material composition, which may be best suited among the material composition recommendations to manufacture the product in accordance with the specification profile 122. The final material composition may then be output at step 660. Optionally, in case of an alloy, gattierung, charge make-up, ore mixing, and/or charge composition may be developed, analyzed and/or determined at step 660 to manufacture the alloy.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

Furthermore, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

## Claims

1. A computer-implemented method of determining a material composition for manufacturing a product (500), the method comprising:
receiving, at a computing device (100) including one or more processors (111), one or more specification parameters (122) indicative of at least one of a material property, a manufacturing process for manufacturing the product, and a product property;
determining one or more material composition recommendations for the material composition based on the received one or more specification parameters;
computing, for each material composition recommendation, one or more expected properties indicative of at least one of an expected material property of the respective material composition recommendation and an expected product property of the product manufactured from the respective material composition recommendation; and
computing, based on evaluating the one or more expected properties computed for each material composition recommendation against the received one or more specification parameters (122), a suitability measure indicative of a degree of suitability to manufacture the product (500) from the respective material composition recommendation.

2. The method according to claim 1, further comprising:
selecting one of the one or more material composition recommendations as the material composition or as final material composition for manufacturing the product based on the computed one or more suitability measures.

3. The method according to any one of the preceding claims, wherein a plurality of material composition recommendations is determined and for each material composition recommendation a suitability measure is computed, and
wherein the method further comprises selecting one of the one or more material composition recommendations as the material composition for manufacturing the product based on inter-comparing at least a subset of the suitability measures computed for different material composition recommendations.

4. The method according to any one of the preceding claims, wherein the suitability measure is a numerical measure indicative of a qualitative and quantitative suitability to manufacture the product from the respective material composition recommendation.

5. The method according to any one of the preceding claims, further comprising:
applying an evaluation metric including one or more criteria related to the material composition and/or the product manufactured therefrom, optionally wherein each of the one or more criteria is associated with an adjustable weight representative of a relevance of the associated criterion.

6. The method according to any one of the preceding claims, wherein a plurality of specification parameters indicative of a material property, a manufacturing process for manufacturing the product, and a product property is received at the computing device.

7. The method according to any one of the preceding claims, wherein for each material composition recommendation a plurality of expected properties indicative of an expected material property and an expected product property of the product manufactured from the respective material composition recommendation is computed.

8. The method according to any one of the preceding claims, wherein the material composition is selected among the group consisting of an alloy, an Aluminum-based alloy, a Magnesium-based alloy, an Aluminum-Magnesium alloy, a metal, and a non-ferrous metal.

9. The method according to any one of the preceding claims, wherein the one or more material composition recommendations are determined based on accessing a database storing at least one of reference data indicative of one or more material properties of one or more reference material components or chemical elements, reference data indicative of one or more material properties of one or more material compositions, reference data indicative of one or more product properties of one or more products, reference data associated with one or more manufacturing processes for manufacturing one or more products, and reference data associated with material processing of one or more material compositions, preferably wherein the data base includes at least one of experimental data and simulation data.

10. The method according to any one of the preceding claims, wherein the one or more expected properties for each material composition recommendation are computed based on simulating the respective material composition recommendation and/or based on simulating a material behavior of the respective material composition recommendation.

11. The method according to any one of the preceding claims, wherein the one or more expected properties for each material composition recommendation are computed based on simulating one or more of a nano structure, an atomic structure, an atomistic structure, a microstructure, and a macro structure of the material composition recommendation and/or the product manufactured therefrom.

12. The method according to any one of the preceding claims, wherein computing the one or more expected properties for each material composition recommendation includes determining, based on simulation, one or more of solidification data indicative of one or more solidification and/or cooling curves for the respective material composition recommendation, phase data indicative of a phase behavior and/or phase diagram of the respective material composition recommendation, precipitation strengthening data indicative of precipitation strengthening of the respective material composition recommendation, and yield strength data indicative of solid solution strengthening of the respective material composition recommendation.

13. The method according to any one of the preceding claims, wherein computing the one or more expected properties for each material composition recommendation includes simulating at least a part of one or more manufacturing processes for manufacturing the product from the respective material composition recommendation, preferably wherein the one or more manufacturing processes include at least one of additive manufacturing, metal additive manufacturing, melting, thermal treatment, powder bed fusion, centrifugal liquid metal atomization, casting, 3D printing, and rolling of the respective material composition recommendation to manufacture the product.

14. The method according to claim 13, wherein simulating at least a part of one or more manufacturing processes for manufacturing the product from the respective material composition recommendation includes determining one or more process parameters indicative of the simulated manufacturing process, preferably wherein the determined one or more process parameters include one or more of an atomizer parameter, a liquid metal flow rate, a liquid metal temperature, a liquid metal droplet size, a powder particle size, a trajectory of a powder particle, a process time, a solidification time, a cooling time, a convection coefficient, a Reynold's number, a Laser intensity, a melting temperature, a heat treatment regime, a duration of one or more process steps, a fluidity, a morphology, a productivity, a density, and a surface roughness.

15. A computing device including one or more processor for data processing, wherein the computing device is configured to carry out steps of the method according to any one of claims 1 to 14.
